# EUROPEAN PATENT SPECIFICATION

(11) **EP 1 640 247 B1**
(45) Date of publication and mention of the grant of the patent: **14.03.2007**
(21) Application number: 05077136.9
(22) Date of filing: 20.09.2005
(51) Int. Cl.: B62D 13/02

(54) **Semi-trailer or trailer with an improved steering control**
Auflieger oder Anhänger mit verbesserter Lenkungsregelung
Semi-remorque ou remorque avec contrôle de direction améliorée

(30) Priority: 23.09.2004 BE 200400468
(43) Date of publication of application: 29.03.2006
(73) Proprietor: Renders S.A., 2453 Luxembourg (LU)
(72) Inventor: Renders, Franciscus Augustinus, 2382 Ravels (Poppel) (BE)
(74) Representative: Donné, Eddy

(56) References cited:
- DE-A1- 1 530 868
- DE-A1- 2 460 186
- DE-B- 1 263 519
- DE-C- 463 028

## Description

The present invention concerns a semi-trailer or trailer with an improved steering control.

More particularly, the invention concerns a semi-trailer or trailer which, as usual, is provided with means to couple the semi-trailer or trailer to a hauling vehicle and which mainly consists of a chassis and at least two steerable wheel shafts which are each fixed to a support, whereby each support is provided in a rotating manner around a vertical shaft on the chassis.

Such a semi-trailer or trailer can be provided with a steering control so as to turn the steerable wheel shafts around their vertical shafts when taking a bend, synchronously with the relative angular displacements of the semi-trailer or trailer in relation to the hauling vehicle.

The steering controls of the known semi-trailers and trailers, such as disclosed for example in DE 1530868 A or in DE 1216519 B, are generally relatively complex, expensive and heavy.

The steering controls of the known semi-trailers and trailers are moreover disadvantageous in that they swerve out relatively much, more particularly with their rear part, when taking a bend.

This swerving out is not only dangerous for the surrounding traffic, it also makes the vehicle unstable by making the vehicle and the load which is situated on the semi-trailer or trailer sway, and it creates increased lateral forces on the chassis, the suspension and the shafts.

Another disadvantage is that the swaying motions of the hauling vehicle are transmitted to the semi-trailer or trailer in a reinforced manner, as a result of which the semi-trailer or trailer will sway more than the hauling vehicle, which is disadvantageous to the stability and manoeuvrability.

Yet another disadvantage is that, with the known steering controls, taking short bends around an obstacle or a person are impossible without damaging the object or hurting the person, such that the driver will have to take his bend along the outside of the curve, which may in turn be dangerous to the oncoming traffic in the curve.

A disadvantage connected thereto is the known problem of the blind spot, whereby persons on the inside of the curve can be accidentally caught by the semi-trailer or trailer whose turning circle is smaller than that of the hauling vehicle.

Another disadvantage thereof is that the tyres of such a semi-trailer or trailer, especially when taking short bends, are subject to strong lateral torsional forces on the road, which is disadvantageous to the wear of the tyres and of the road surface, as well as to the fuel consumption.

The present invention aims to provide a solution to one or several of the above-mentioned and other disadvantages.

To this end, the invention concerns a semi-trailer or trailer with an improved steering control which mainly consists of a chassis and at least two steerable wheel shafts, whereby each steerable wheel shaft fixed to a support which is provided in a rotating manner around a vertical shaft on the chassis and which is provided with a control to turn the steerable wheel shaft concerned around the vertical shaft concerned, as well as means which make it possible to couple the semi-trailer or trailer to a hauling vehicle, whereby each rotatable support of the steerable wheel shafts comprises a rod which can be axially shifted in a guide of the rotatable support concerned and whereby both these rods, each with one far end respectively, are connected to a common control in the shape of a turntable which is fixed to the chassis and which can rotate around a vertical shaft by means of a vertical hinge element, whereby said turntable is provided with a drive which moves the turntable synchronously with the relative angular displacements of the semi-trailer or trailer in relation to the hauling vehicle.

By activating the above-mentioned drive when taking a bend, the common turntable and thus also the hinge-mounted far ends of the rods are turned at an appropriate angle, as a result of which these rods will in turn rotate the steerable shafts at an appropriate angle, such that the semi-trailer steers better in the bend.

Surprisingly, thanks to a common control in the form of a common turntable, a vehicle with a very good road-holding and stability is obtained.

By applying a common turntable which is positioned between the steerable wheel shafts, one can make sure that both wheel shafts of the semi-trailer or trailer, when taking a bend, are turned in the opposite sense and moreover at a different angle, such that the control can be easily adjusted to the geometry of any semi-trailer or trailer whatsoever.

This phenomenon of an unequal control of the shafts can be further adjusted by placing the turntable eccentrically between the above-mentioned steerable wheel shafts and thus at a different distance from each of these steerable wheel shafts.

The above-mentioned hinge element with which each rod is connected to the turntable is preferably a common hinge element, and each of the above-mentioned guides of a rod of the stearable wheel shafts is directed crosswise to the longitudinal direction of the steerable wheel shaft concerned, such that when driving straight on, the hinge element is situated in a front or rear position.

This offers the advantage that the steering control, when taking soft bends, will react less sensitively than when taking short, sharp bends, which is an advantage, since swaying on the road is reduced, whereas it becomes possible to make a short turning circle when taking sharp bends without the risk of accidentally colliding with a person or obstacle on the inside of the curve.

The reduced swaying is good for the stability and manoeuvrability of the vehicle and results in a reduced lateral load of the chassis, the wheels and the suspension, which results in less wear.

In order to better explain the characteristics of the invention, the following preferred embodiments of a semi-trailer and a trailer with an improved steering control according to the invention are given as an example only without being limitative in any way, with reference to the accompanying drawings, in which:
figure 1 schematically represents a view of a vehicle consisting of a hauling vehicle and a semi-trailer coupled to it which is provided with two steerable shafts and an improved steering control according to the invention;

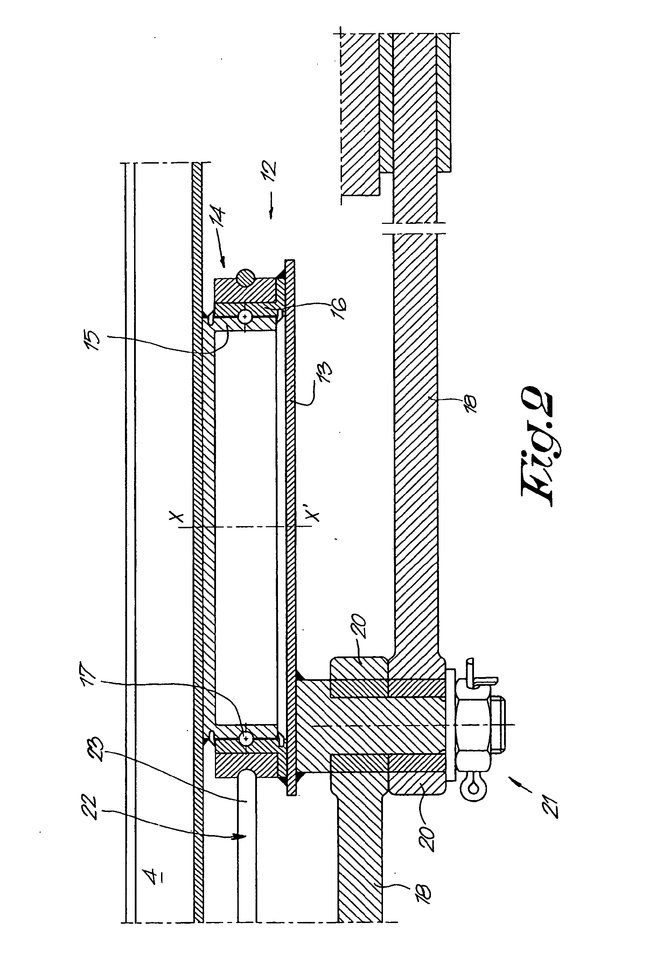

figure 2 represents a section according to line II-II in figure 1 to a larger scale;
figure 3 represents the vehicle of figure 1, but while taking a bend;
figure 4 represents a variant of figure 1;
figure 5 represents the vehicle of figure 4 while taking a bend;
figure 6 represents a variant whereby the semi-trailer is provided with an additional rigid shaft;
figure 7 represents the vehicle of figure 6 when taking a bend;
figure 8 represents a comparison of the steering behaviour of a vehicle with a semi-trailer with an improved stearing control according to the invention in relation to a comparable vehicle with a known steering control;
figure 9 represents a variant of figure 4, but with a trailer instead of a semi-trailer.

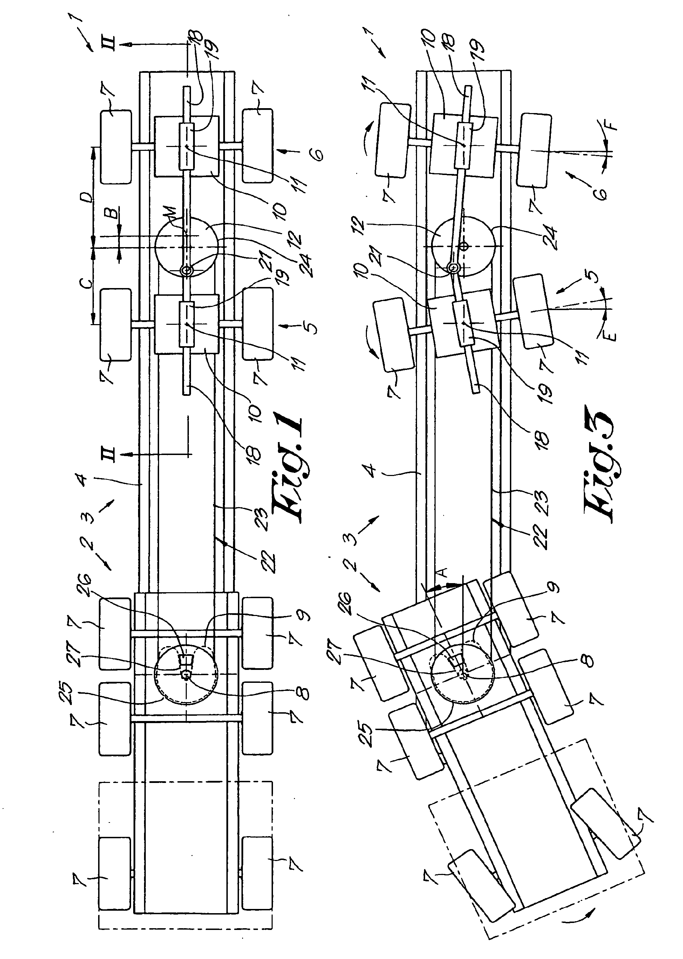

The vehicle 1 of figure 1 is formed of a hauling vehicle 2 and a semi-trailer 3 coupled to it which mainly consists of a chassis 4 which is in this case supported by at least two steerable wheel shafts 5 and 6 with wheels 7.

The semi-trailer 3 is coupled to the hauling vehicle 2 by means of a conventional king pin 8 which can co-operate in a rotating manner with a coupling dish 9 on the hauling vehicle 2.

The stearable wheel shafts 5 and 6 are each fixed to a support 10 which is provided in a rotating manner around a vertical shaft 11 on the chassis 4.

The semi-trailer 3 is provided with an improved steering control according to the invention which, in the given example of figure 1, comprises a turntable 12 in the form of a plate 13 which is fixed in a rotating manner around a vertical shaft X-X' to the chassis 4 by means of a rotating ring 14, whereby this rotating ring 14, as is known, consists of an inner ring 15 with which the rotating ring 14 is fixed to the chassis 4 and an outer ring 16 onto which the plate 13 is fixed, and ball bearings 17 which enable the outer ring 16 to turn around the inner ring 15.

In the given example, the turntable 12 is provided between the two steerable wheel shafts 5 and 6 and it is, more particularly, placed eccentrically in relation to the middle M of the centre line between the rotary shafts 11 of the steerable wheel shafts 5 and 6, whereby the turntable 12 is moved more to the front over a distance B and, in other words, the centre of the turntable 12 is situated at a shorter distance C from the front steerable wheel shaft 5 than the distance D to the rear steerable wheel shaft 6.

The improved steering control is further formed of two rods 18 which can axially shift in a guide 19 of each of the above-mentioned rotatable supports 10, which rods 18 are connected to the above-mentioned turntable 12 with one far end 20 by means of a, in this case, common vertical hinge element 21, at a distance from the axis of rotation X-X' of the turntable 12.

The guides 19 are in this case formed of bushes in which the rods 18 concerned are provided in a shifting manner, and which are fixed to the respective supports 10 of the stearable wheel shafts in a direction crosswise to the longitudinal direction of each stearable wheel shaft 5, 6 concerned and going through the vertical rotary shaft 11 of the support 10 concerned.

The turntable 12 is provided with a drive 22 which, in this case, is formed of a cable drive with a cable 23 which is guided over a first cable pulley 24 fixed to the outer ring 16 of the rotating ring 14 on the one hand, and which is guided over a second cable pulley 25 on the other hand, by means of a second rotating ring which is not represented in the figures, which second cable pulley is fixed to the chassis 4 in a rotating manner in a centred position in relation to the above-mentioned king pin 8, and which can co-operate with the coupling dish 9 of the hauling vehicle 2 since a wedge 26 is fixed to the second cable pulley 25 which, when coupled, is held in a peg-shaped groove 27 of the coupling dish 9.

The working of the improved stearing control according to the invention is very simple and as follows.

When the hauling vehicle 2 drives straight ahead, the steerable wheel shafts 5 and 6 are situated, as represented in figure 1, in a neutral position crosswise to the longitudinal direction of the semi-trailer 3.

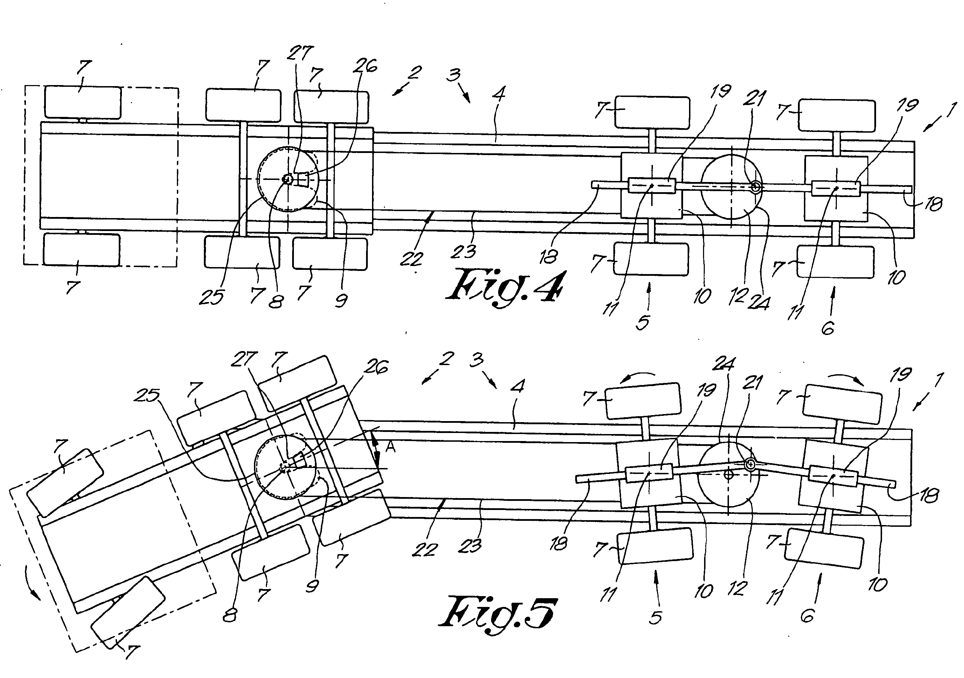

When the hauling vehicle 2 takes a bend, as is represented in figure 3, a mutual angular displacement A is created between the hauling vehicle 2 and the semi-trailer 3, as a result of which the turntable 12 is driven synchronously with this angular displacement A at a proportional angle or, in the given example whereby the cable pulleys 24 and 25 have the same diameter, at an identical angle A.

As the turntable 12 rotates, the common hinge element 21 between the far ends 20 of the rods 18 is taken along in this revolving motion, as a result of which these rods 18 turn the steerable wheel shafts 5 and 6 in the opposite sense, at angles E and F respectively which are mutually different, such that the wheels 7 are directed according to the curve of the bend and the semi-trailer 3 will behave better in the bend.

Thanks to the fact that the rods are controlled by a turntable, the stearable wheel shafts can be turned at larger angles than with the known stearing controls, which is advantageous when taking short bends.

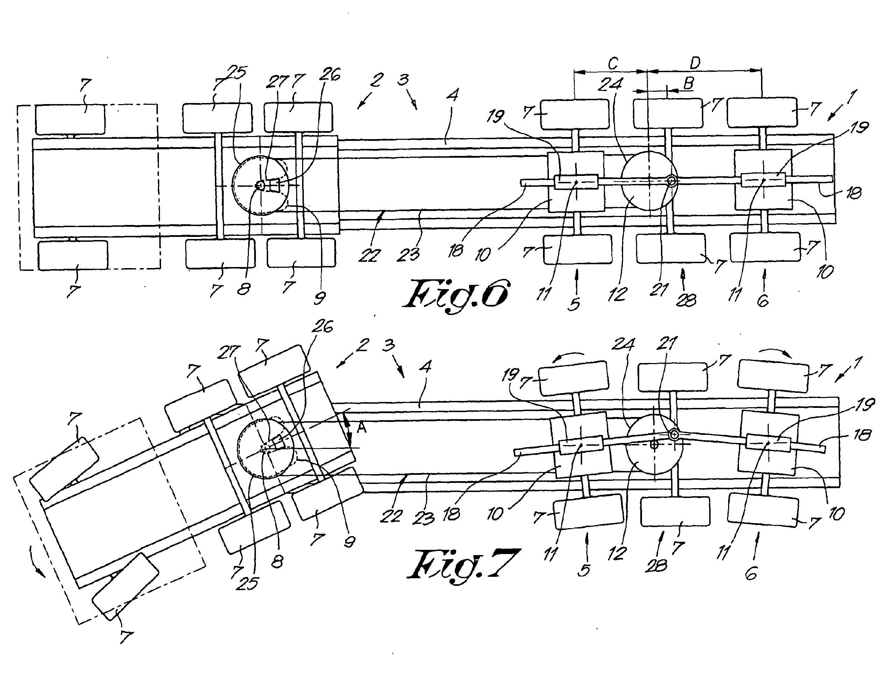

Figure 4 represents a variant of a vehicle 1 from figure 1, whereby, in this case, the common hinge element 21 is situated in a position directed towards the rear of the semi-trailer 3 when the steerable wheel shafts 5 and 6 are turned in a neutral position so as to be able to drive straight on.

The working of this variant is analogous to that of figure 1, with this difference that, when taking a bend as represented in figure 5, the steerable wheel shafts 5 and 6 are turned at other angles than in the case of figure 3.

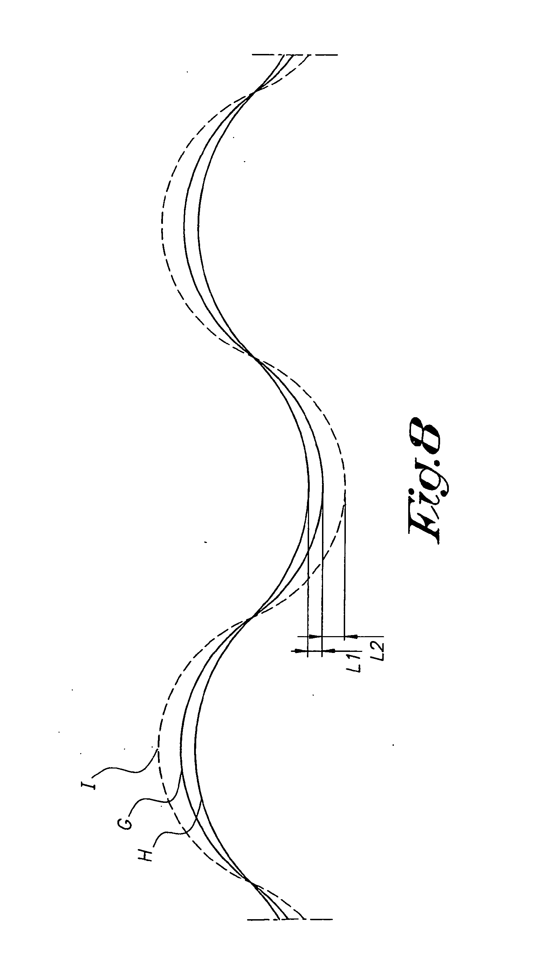

Figure 6 represents a variant of figure 4 with a semi-trailer with three shafts, whereby, in this case, an additional rigid shaft 28 is provided between the steerable shafts 5 and 6.

The steering behaviour of such a variant, as represented in figure 7, is analogous to that of the preceding variant.

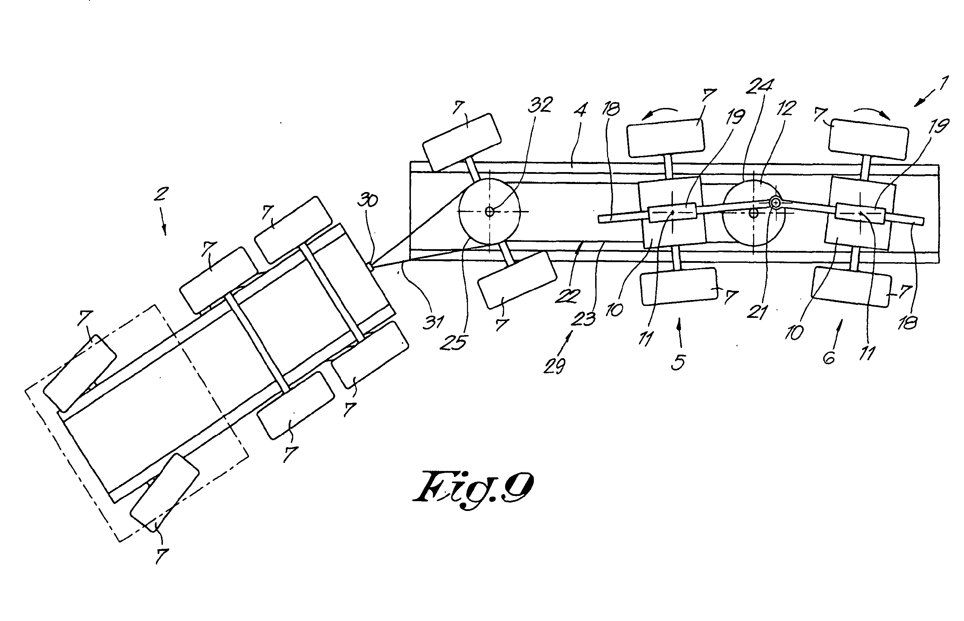

Figure 8 schematically represents, by means of the curve G, the trajectory as of the centre of the front side of the hauling vehicle 2 when following a winding track, and curves H and I represent the corresponding trajectories as of the centre of the rear of a semi-trailer 3, with a steering control according to the invention and with a known steering control respectively.

A comparison of the trajectories H and I clearly indicates that a semi-trailer 3 with a steering control according to the invention is directed towards the inside of the trajectory G, whereas a semi-trailer with a comparable length and with a conventional stearing control is directed towards the outside of the trajectory G, and that moreover the swaying motion H of a semi-trailer with a stearing control according to the invention is attenuated, whereas the swaying motion I of a semi-trailer with a conventional steering control is reinforced rather.

Tests have shown that, with a steering control according to the invention, the maximum lateral deviation L1 between the curves G and H is in the order of magnitude of 20 cm, whereas the maximum deviation L2 between the curves G and I is much bigger.

Figure 9 represents a variant whereby an improved steering control according to the invention is applied to a trailer 29, whereby the means for coupling the trailer to a hauling vehicle 2 are formed of a towing hook 30 on the hauling vehicle 2 and what is called a pole 31 working in conjunction with it which is provided on the trailer 29 in such a manner that it can rotate around a point of rotation 32, and whereby the second cable pulley 25 is provided in a centred manner on the chassis in relation to said point of rotation 32 and is turned by the relative movements of the pole 31.

Although, in the figures, the turntable 11 is provided with a cable drive 22, it is not excluded to provide other drives in the form of a hydraulic, pneumatic, electric or other mechanical drive.

It is clear that the invention can be applied to a semi-trailer 3 with more than two steerable shafts and with several rigid shafts.

The present invention is by no means limited to the embodiments given as an example and represented in the accompanying drawings; on the contrary, such a semi-trailer or trailer with an improved stearing control according to the invention can be made in all sorts of shapes and dimensions while still remaining within the scope of the invention as defined by the claims.

## Claims

1. Semi-trailer or trailer with an improved steering control which mainly consists of a chassis (4) and at least two steerable wheel shafts (5,6), whereby each steerable wheel shaft (5,6) is fixed to a support (10) which is provided in a rotating manner around a vertical shaft (11) on the chassis (4) and which is provided with a control to turn the steerable wheel shaft (5,6) concerned around the vertical shaft (11) concerned, as well as means which make it possible to couple the semi-trailer (3) or trailer (29) to a hauling vehicle (2), **characterised in that** each rotatable support (10) of the steerable wheel shafts (5,6) comprises a rod (18) which can be axially shifted in a guide (19) of the rotatable support (10) concerned, whereby both these rods (18), each with one far end (20) respectively, are connected to a common control in the shape of a turntable (12) which is fixed to the chassis (4) and which can rotate around a vertical shaft (X-X'), whereby said turntable (12) is provided with a drive (22) which moves the turntable (12) synchronously with the relative angular displacements (A) of the semi-trailer (3) or trailer (29) in relation to the hauling vehicle (2).

2. Semi-trailer or trailer according to claim 1, **characterised in that** a hinge element (21) with which each rod (18) is connected to the turntable (12) is a common hinge element (21) which is situated at a distance from the axis of rotation (X-X') of this turntable (12).

3. Semi-trailer or trailer according to claim 1 or 2, **characterised in that** each above-mentioned guide (19) of a rod (18) of the steerable wheel shafts (5,6) is directed crosswise to the longitudinal direction of the steerable wheel shaft(5,6) concerned.

4. Semi-trailer or trailer according to any one of the preceding claims, **characterised in that** each rod (18) of the steerable wheel shafts (5,6) crosses the vertical shaft (11) of the support (10) of the steerable wheel shaft (5,6) concerned.

5. Semi-trailer or trailer according to claim 1, **characterised in that** the guides (19) of the rods (18) are formed of a pipe in which the rod concerned can shift and which is fixed to the rotatable support (10) concerned.

6. Semi-trailer or trailer according to any one of the preceding claims, **characterised in that** the turntable (12) is situated between the two steerable wheel shafts (5,6).

7. Semi-trailer or trailer according to claim 6,
**characterised in that** the turntable (12) is placed eccentrically between the above-mentioned steerable wheel shafts (5,6), in other words at a different distance (C,D) from each of these steerable wheel shafts (5,6).

8. Semi-trailer or trailer according to claim 7, **characterised in that** the turntable (12) is situated at a distance (C) from the front steerable wheel shaft (5) which is smaller than the distance (D) to the rear steerable wheel shaft (6).

9. Semi-trailer or trailer according to any one of claims 2 to 8, **characterised in that** when the steerable wheel shafts (5,6) are situated in a neutral position so as to drive straight on, the common hinge element (21) is situated in a position directed to the rear of the semi-trailer (3) or trailer (29).

10. Semi-trailer or trailer according to any one of the preceding claims, **characterised in that** the drive (22) of the turntable (12) is formed of a cable drive with a cable (23) which is guided over two cable pulleys, namely a first cable pulley (24) which is coaxially fixed to the above-mentioned turntable (12) and a second cable pulley (25) which is fixed to the chassis (4) in rotating manner and which works in conjunction with the hauling vehicle (2), such that a relative angular displacement (A) of the semi-trailer (3) or trailer (29) in relation to the hauling vehicle (2) results in a synchronous rotation of the above-mentioned first and second cable pulleys (24, 25).

11. Semi-trailer or trailer according to claim 10, **characterised in that** both above-mentioned cable pulleys (24,25) have the same diameter.

12. Semi-trailer according to claim 10 or 11, **characterised in that** the means for coupling the semi-trailer (3) to a hauling vehicle (2) are formed of a coupling dish (9) on the hauling vehicle (2) and a so-called king pin (8) on the semi-trailer (3) working in conjunction with it, and **in that** the second cable pulley (25) is provided in a centred manner in relation to the above-mentioned king pin (8) on the chassis (4) and is turned by the relative movements of the coupling dish (9).

13. Trailer according to claim 10 or 11, **characterised in that** the means for coupling the trailer (29) to a hauling vehicle (2) are formed of a towing hook (30) on the hauling vehicle (2) and a so-called pole (31) working in conjunction with it which is provided in a rotatable manner on the trailer (29), and **in that** the second cable pulley (25) is provided in a centred manner in relation to the point of rotation (32) of the pole (31) on the chassis of the trailer and is turned by the relative movements of the pole (31).

14. Semi-trailer or trailer according to any one of claims 1 to 11, **characterised in that** the swaying motions of the semi-trailer (3) or trailer (29) are weaker than the swaying motions of the hauling vehicle (2).

## Patentansprüche

1. Auflieger oder Anhänger mit verbesserter Lenkung, der im Wesentlichen aus einem Fahrgestell (4) und mindestens zwei lenkbaren Radachsen (5,6) besteht, wobei jede lenkbare Radachse (5,6) an einer Stütze (10) befestigt ist, die rotierbar um eine vertikale Achse (11) an dem Fahrgestell (4) angebracht ist und die mit einer Lenkung zum Verdrehen der betreffenden lenkbaren Radachse (5,6) um die betreffende vertikale Achse (11) versehen ist, sowie Mitteln, die das Koppeln des Aufliegers (3) oder Anhängers (29) an ein Zugfahrzeug (2) ermöglichen, **dadurch gekennzeichnet, dass** jede rotierbare Stütze (10) der lenkbaren Radachsen (5,6) eine Stange (18) umfasst, die in einer Führung (19) der betreffenden rotierbaren Stütze (10) axial verschiebbar ist, wobei diese beiden Stangen (18) jede mit jeweils einem Ende (20) mit einer gemeinsamen Lenkung in Form eines Drehgelenks (12) verbunden sind, welches an dem Fahrgestell (4) befestigt ist und um eine vertikale Achse (X-X') rotieren kann, wobei besagtes Drehgelenk (12) mit einem Antrieb (22) versehen ist, der das Drehgelenk (12) synchron zu den relativen Winkelverdrehungen (A) des Aufliegers (3) oder Anhängers (29) in Bezug auf das Zugfahrzeug (2) bewegt.

2. Auflieger oder Anhänger gemäß Anspruch 1, **dadurch gekennzeichnet, dass** ein Scharnierelement (21), womit jede Stange (18) mit dem Drehgelenk (12) verbunden ist, ein gemeinsames Scharnierelement (21) ist, das sich in einem Abstand zur Drehachse (X-X') dieses Drehgelenks (12) befindet.

3. Auflieger oder Anhänger gemäß Anspruch 1 oder 2, **dadurch gekennzeichnet, dass** jede oben erwähnte Führung (19) einer Stange (18) der lenkbaren Radachsen (5,6) quer zur Längsrichtung der betreffenden lenkbaren Radachse (5,6) gerichtet ist.

4. Auflieger oder Anhänger gemäß einem der vorhergehenden Ansprüche, **dadurch gekennzeichnet, dass** jede Stange (18) der lenkbaren Radachsen (5,6) die vertikale Achse (11) der Stütze (10) der betreffenden Radachse (5,6) kreuzt.

5. Auflieger oder Anhänger gemäß Anspruch 1, **dadurch gekennzeichnet, dass** die Führungen (19) der Stangen (18) durch ein Rohr gebildet werden, worin die betreffende Stange sich verschieben kann und das an der betreffenden rotierbaren Stütze (10) befestigt ist.

6. Auflieger oder Anhänger gemäß einem der vorhergehenden Ansprüche, **dadurch gekennzeichnet, dass** sich das Drehgelenk (12) zwischen den zwei lenkbaren Radachsen (5,6) befindet.

7. Auflieger oder Anhänger gemäß Anspruch 6, **dadurch gekennzeichnet, dass** das Drehgelenk (12) exzentrisch zwischen den obengenannten lenkbaren Radachsen (5,6) aufgestellt ist, mit anderen Worten, in einem unterschiedlichen Abstand (C, D) zu jeder dieser lenkbaren Radachsen (5,6).

8. Auflieger oder Anhänger gemäß Anspruch 7, **dadurch gekennzeichnet, dass** das Drehgelenk (12) sich in einem Abstand (C) von der vorderen lenkbaren Radachse (5) befindet, der kleiner ist als der Abstand (D) zu der hinteren lenkbaren Radachse (6).

9. Auflieger oder Anhänger gemäß einem der Ansprüche 2 bis 8, **dadurch gekennzeichnet, dass**, wenn die lenkbaren Radachsen (5,6) sich in einer neutralen Position befinden, um geradeaus zu fahren, das gemeinsame Scharnierelement (21) sich in einer zur Hinterseite des Aufliegers (3) oder Anhängers (29) gerichteten Position befindet.

10. Auflieger oder Anhänger gemäß einem der vorhergehenden Ansprüche, **dadurch gekennzeichnet, dass** der Antrieb (22) des Drehgelenks (12) durch einen Kabeltrieb mit einem Kabel (23), das über zwei Seilscheiben geführt wird, gebildet wird, nämlich einer ersten Seilscheibe (24), die koaxial an dem oben erwähnten Drehgelenk (12) befestigt ist, und einer zweiten Seilscheibe (25), die rotierbar an dem Fahrgestell (4) befestigt ist und die mit dem Zugfahrzeug (2) zusammenwirkt, sodass eine relative Winkelverdrehung (A) des Aufliegers (3) oder Anhängers (29) in Bezug zu dem Zugfahrzeug (2) in einer synchronen Rotation der oben erwähnten ersten und zweiten Seilscheiben (24, 25) resultiert.

11. Auflieger oder Anhänger gemäß Anspruch 10, **dadurch gekennzeichnet, dass** beide obenerwähnten Seilscheiben (24, 25) den gleichen Durchmesser haben.

12. Auflieger gemäß Anspruch 10 oder 11, **dadurch gekennzeichnet, dass** die Mittel zum Ankuppeln des Aufliegers (3) an ein Zugfahrzeug (2) durch eine Sattelplatte (9) an dem Zugfahrzeug (2) und einem damit zusammenwirkenden sogenannten Königszapfen (8) an dem Auflieger (8) gebildet werden, und dass die zweite Seilscheibe (25) zentriert in Bezug auf den oben erwähnten Königszapfen (8) an dem Fahrgestell (4) angebracht ist und durch die relativen Bewegungen der Sattelplatte (9) verdreht wird.

13. Anhänger gemäß Anspruch 10 oder 11, **dadurch gekennzeichnet, dass** die Mittel zum Ankuppeln des Anhängers (29) an ein Zugfahrzeug (2) durch eine Anhängerkupplung (30) an dem Zugfahrzeug (2) und eine damit zusammenwirkende sogenannte Deichsel (31), die rotierbar auf dem Anhänger (29) angebracht ist, gebildet werden, und dass die zweite Seilscheibe (25) zentriert in Bezug zu dem Drehpunkt (32) der Deichsel (31) an dem Fahrgestell des Anhängers angebracht ist und durch die relativen Bewegungen der Deichsel (31) verdreht wird.

14. Auflieger oder Anhänger gemäß einem der Ansprüche 1 bis 11, **dadurch gekennzeichnet, dass** die Auslenkbewegungen des Aufliegers (3) oder Anhängers (29) schwächer sind als die Auslenkbewegungen des Zugfahrzeugs (2).

## Revendications

1. Semi-remorque ou remorque muni d'un contrôle perfectionné de la direction, qui est constitué principalement par un châssis (4) et par au moins deux arbres de roues dirigées (5, 6), chaque arbre de roue dirigée (5, 6) étant fixé à un support (10) qui est prévu en rotation autour d'un arbre vertical (11) sur le châssis (4) et qui est muni d'une commande pour faire tourner l'arbre de roue dirigée (5, 6) concerné autour de l'arbre vertical (11) concerné, et par des moyens qui permettent de coupler le semi-remorque (3) ou la remorque (29) à un véhicule tracteur (2), **caractérisé en ce que** chaque support rotatif (10) des arbres de roues dirigées (5, 6) comprend une tige (18) apte à se déplacer en direction axiale dans un guide (19) du support rotatif (10) concerné, ces deux tiges (18), chacune comprenant une extrémité éloignée (20), respectivement, étant reliées à une commande commune sous la forme d'une plaque tournante (12) qui est fixée au châssis (4) et qui peut tourner autour d'un arbre vertical (X-X'), ladite plaque tournante (12) étant munie d'un entraînement (22) qui déplace la plaque tournante (12) de manière synchrone avec les déplacements angulaires relatifs (A) du semi-remorque (3) ou de la remorque (29) par rapport au véhicule tracteur (2).

2. Semi-remorque ou remorque selon la revendication 1, **caractérisé en ce qu'**un élément d'articulation (21) avec lequel chaque tige (18) est reliée à la plaque tournante (12) est un élément d'articulation commun (21) qui est situé à distance de l'axe de rotation (X-X') de cette plaque tournante (12).

3. Semi-remorque ou remorque selon la revendication 1 ou 2, **caractérisé en ce que** chaque guide susmentionné (19) d'une tige (18) des arbres de roues dirigées (5, 6) est orienté en direction transversale par rapport à la direction longitudinale de l'arbre de roue dirigée (5, 6) concerné.

4. Semi-remorque ou remorque selon l'une quelconque des revendications précédentes, **caractérisé en ce que** chaque tige (18) des arbres de roues dirigées (5, 6) traverse l'arbre vertical (11) du support (10) de l'arbre de roue dirigée (5, 6) concerné.

5. Semi-remorque ou remorque selon la revendication 1, **caractérisé en ce que** les guides (19) des tiges (18) sont réalisés sur la forme d'un conduit tubulaire dans lequel la tige concernée peut se déplacer et qui est fixé au support rotatif (10) concerné.

6. Semi-remorque ou remorque selon l'une quelconque des revendications précédentes, **caractérisé en ce que** la plaque tournante (12) est située entre les deux arbres de roues dirigées (5, 6).

7. Semi-remorque ou remorque selon la revendication 6, **caractérisé en ce que** la plaque tournante (12) est placée en position excentrique entre les arbres de roues dirigées susmentionnés (5, 6), en d'autres termes à une distance différente (C, D) par rapport à chacun de ces arbres de roues dirigées (5, 6).

8. Semi-remorque ou remorque selon la revendication 7, **caractérisé en ce que** la plaque tournante (12) est située à une distance (C) de l'arbre de roue dirigée avant (5), qui est inférieure à la distance (D) par rapport à l'arbre de roue dirigée arrière (6).

9. Semi-remorque ou remorque selon l'une quelconque des revendications 2 à 8, **caractérisé en ce que**, lorsque les arbres de roues dirigées (5, 6) sont situés dans une position neutre de façon à rouler en ligne droite, l'élément d'articulation commun (21) est situé dans une position orientée vers l'arrière du semi-remorque (3) ou de la remorque (29).

10. Semi-remorque ou remorque selon l'une quelconque des revendications précédentes, **caractérisé en ce que** l'entraînement (22) de la plaque tournante (12) est constitué d'un entraînement par câble comportant un câble (23) qui est guidé par-dessus deux poulies à câbles, plus précisément une première poulie à câble (24) qui est fixée en position coaxiale à la plaque tournante susmentionnée (12) et une deuxième poulie à câble (25) qui est fixée au châssis (4) de manière rotative et qui travaille de concert avec le véhicule tracteur (22), de telle sorte qu'un déplacement angulaire relatif (A) du semi-remorque (3) ou de la remorque (29) par rapport au véhicule tracteur (2) donne lieu à une rotation synchrone des premières et deuxième poulies à câbles susmentionnées (24, 25).

11. Semi-remorque ou remorque selon la revendication 10, **caractérisé en ce que** les poulies à câbles susmentionnées (24, 25) possèdent le même diamètre.

12. Semi-remorque ou remorque selon la revendication 10 ou 11, **caractérisé en ce que** les moyens pour atteler le semi-remorque (3) à un véhicule tracteur (2) sont constitués par une sellette d'attelage (9) sur le véhicule tracteur (2) et par ce que l'on appelle un pivot d'attelage (8) sur le semi-remorque (3) travaillant conjointement avec la première citée, et **en ce que** la deuxième poulie à câble (25) est prévue en position centrée par rapport au pivot d'attelage (8) susmentionné sur le châssis (4) et tourne en étant entraînée par les mouvements relatifs de la sellette d'attelage (9).

13. Semi-remorque ou remorque selon la revendication 10 ou 11, **caractérisé en ce que** les moyens pour atteler la remorque (29) à un véhicule tracteur sont constitués par un crochet de remorquage (30) sur le véhicule tracteur (2) et par ce que l'on appelle une poutre télescopique (31) travaillant de concert avec le premier cité, qui est prévue en rotation sur la remorque (29), et **en ce que** la deuxième poulie à câble (25) est prévue en position centrée par rapport au point de rotation (32) de la poutre télescopique (31) sur le châssis de la remorque et tourne en étant entraînée par les mouvements relatifs de la poutre télescopique (31).

14. Semi-remorque ou remorque selon l'une quelconque des revendications 1 à 11, **caractérisé en ce que** les mouvements de roulis du semi-remorque (3) ou de la remorque (29) sont moins prononcés que les mouvements de roulis du véhicule tracteur (2).
